# EUROPEAN PATENT APPLICATION

(11) **EP 4 109 373 A1**
(43) Date of publication of application: **28.12.2022**
(21) Application number: 21181334.0
(22) Date of filing: 24.06.2021
(51) Int. Cl.: G06Q 30/00

(54) **METHOD FOR AUGMENTED REALITY-ASSISTED HANDLING OF A PACKAGE, COMPRISING AT LEAST ONE OBJECT; USER DEVICE; SYSTEM; PROGRAM AND COMPUTER-READABLE MEDIUM**

(71) Applicant: Deutsche Telekom AG, 53113 Bonn (DE)
(72) Inventor: AHNEBRINK, Alexander, 53173 Bonn (DE); HANISCH, Andre, 53347 Alfter (DE); SIEBER, Rafaela, 80796 München (DE); JARUGA, Gregor, 86343 Königsbrunn (DE)
(74) Representative: Schwöbel, Thilo K.

(57) **Abstract**

The invention relates to a method for augmented reality-assisted handling of a package, comprising at least one object, by means of a user device, wherein the user device comprises detection means and wherein the user device comprises a display device or is in communication with a display device,
wherein the package comprises a visual marker, wherein the visual marker is related to the object,
wherein for the for the augmented reality-assisted handling of the package the method comprises at least the following steps:
-- by means of the detection means of the user device the visual marker of the package is detected, wherein an image or video of the package is displayed on the display device,
-- in response to detecting the visual marker, an augmented reality procedure is carried out, wherein the augmented reality procedure at least comprises that - in the displayed image or video, displayed by means of the display device, - the package is opened and/or an image of the object is displayed.

## Description

### BACKGROUND

The present invention relates to a method for handling a package, comprising at least one object.

Furthermore, the present invention relates to a user device for handling a package, comprising at least one object.

Additionally, the present invention relates to a system for handling a package, comprising at least one object.

Furthermore, the present invention relates to a program and to a computer-readable medium.

For many products, technical information on the product and how the product needs to be installed is required to ensure a functional installation of the product and a high customer satisfaction. With the rising popularity of online shopping, products are increasingly shipped directly to the premise of a customer, resulting in increasing pollution from transports, material waste and printing. The products or objects are usually shipped in packages and are additionally enclosed in cardboard boxes with printed logos and graphics on them. Apart from the box itself - for a variety of products - printed guides, which require additional materials, are fabricated and shipped with the product. Often updates of the box graphics or instructions are needed or desired, and the outdated guides and boxes have to be discarded and reprinted.

Sustainable, energy-efficient and environment-friendly solutions are therefore highly desirable.

### SUMMARY

An object of the present invention is to provide an environment-friendly method for handling a package, comprising at least one object, wherein a high customer satisfaction may be achieved.

The object of the present invention is achieved by a method for augmented reality-assisted handling of a package, comprising at least one object, by means of a user device, wherein the user device comprises detection means and wherein the user device comprises a display device or is in communication with a display device, wherein the package comprises a visual marker, wherein the visual marker is related to the object,
wherein for the for the augmented reality-assisted handling of the package the method comprises at least the following steps:
-- by means of the detection means of the user device the visual marker of the package is detected, wherein an image or video of the package is displayed on the display device,
-- in response to detecting the visual marker, an augmented reality procedure is carried out, wherein the augmented reality procedure at least comprises that - in the displayed image or video, displayed by means of the display device, - the package is opened and/or an image of the object is displayed.

It is thereby advantageously possible according to the present invention to reduce negative environmental impacts related to the packing, distribution and unboxing of objects and the printing. At the same time, it is possible by means of the present invention that a high customer satisfaction may be achieved and that relevant information, related to the object, may be made available to a user or customer in an intuitive way. For instance, the user may experience a virtual unboxing, which displays a virtual image of the object as part of the augmented reality procedure. Therefore, the user experience may be improved, while the material usage and production of waste can be minimized.

According to the present invention, it is advantageously possible for a user to discover the objects (or products) using an augmented reality overlay, sounds, videos and/or images without opening the package or before opening the package, e.g., even in a store. As such, in addition to reducing the amount of material involved in packaging and shipping products, it is also advantageously possible according to the present invention to communicate product features to a user and to support a user during an un-boxing and installation process.

According to the present invention, it is especially preferred that the augmented reality (AR) procedure is carried out by means of an application program (App) that is executed on computing means of the user device.

Current packaging solutions known from the state of the art try to reduce negative environmental impacts by using more sustainable materials and ecological printing techniques. However, negative impacts from the high amount of employed packaging material and printing remain even in this case. Moreover, especially due to theft risks, known packaging solutions employ a double packaging of an object, using an exterior shipping box without graphics or visuals and an interior box, in which the object is located and which typically comprises printings and graphics on its outer side. Thus, in systems known from the state of the art, the packaging is doubled.

Such disadvantages may be reduced by means of an augmented realty procedure (or process) according to the present invention, as the amount of packaging material and printing can be reduced, while advantageous user experience can be achieved.

In particular, according to the present invention, it is advantageously possible to avoid printing any graphics or information on the outside of the package, which reduce the risk of theft, because the outside of the package does not comprise graphics and logos that indicate the content of the package. Thereby, it is not necessary according to the present invention to use two package layers.

According to an embodiment of the present invention, it is preferred that the user device is a mobile device. The user device preferably is or comprises a smartphone, a portable computer, a tablet device and/or wearable computer means, especially smartglasses.

According to an embodiment of the present invention is preferably possible, that the detection means comprise a camera.

According to an embodiment of the present invention, the at least one object, comprised in the package, may comprise a plurality of sub-objects. The object may also be understood as a product or a plurality of sub-products. For instance, the object could be an electronic device, such as a router or smartphone, that is sold or to be sold to a user.

According to an embodiment of the present invention, it is possible that the visual marker is linked to the at least one object inside the package and suitable for identifying the object in the package. It is especially conceivable that the visual marker comprises a Quick Response (QR) code. Alternatively or additionally, the visual marker may, e.g., comprise a bar code.

According to an embodiment of the present invention, it is possible
-- that the displayed image or video of the package, which is displayed on the display device, is a recorded image or video of the package, which is recorded by means of the detection means, or
-- that the displayed image or video of the package, which is displayed on the display device, is a virtual image or video of the package, which is displayed in dependence of the detected visual marker and/or in response to detecting the visual marker.

According to an embodiment of the present invention, the steps of the inventive method, especially the augmented reality procedure, are carried out while the package is located in a store and/or before the object is sold to a customer, especially the user. According to an alternative embodiment of the present invention, the steps of the inventive method, especially the augmented reality procedure, are carried out at a customer premise or site, especially after the package has been transported to the customer premise or site.

According to an embodiment of the present invention, the augmented reality procedure comprises that - in the displayed image or video - the package is opened and the image of the object moves out of the opened package. Thereby, an authentic virtual unboxing of the object becomes possible.

According to an embodiment of the present invention, the augmented reality procedure additionally comprises that information related to the object, especially information on technical features of the object, is displayed. Thereby, it is possible to incorporate additional technical information of the object, e.g., on specific features of the object, into the method, without the need that such information needs to be printed onto the package (or box) or in a manual. By removing printed materials, such as brochures, legal information or installation guides, a particularly cost-efficient and sustainable method can be achieved. Additionally, it is conceivable that any information, linked to the visual marker and/or related to the object, may be updated without the need of reprinting any material. In particular, it is possible that less material is discarded as the information related to the object that is displayed as part of the augmented reality procedure can be updated or changed without the need of reprinting any material or boxes. In particular, any content that is linked to the visual marker can be updated with little effort for different releases or changes of the object.

According to an embodiment of the present invention, the augmented reality procedure comprises, especially after and/or while the package is opened as part of the augmented reality procedure, that - in the displayed image or video - the package transforms into two or more three-dimensional elements, wherein preferably a first element of said two or more three-dimensional elements is optically highlighted and/or positioned closer to a user than the other element or elements of said two or more three-dimensional elements,
wherein by means of an input of the user, especially using input means of the user device or connected to the user device, the first element is selectable by the user. The input of the user can also be understood as an interaction of the user with the input means of the user device. The input means may, e.g., comprise a touchpad, an eye-tracking means, a button, a keyboard or the like. It is especially possible that selecting the first element (e.g., clicking on the first element) will bring the user to a next step, wherein information related to the object, especially information on technical features of the object, is displayed. The first element is preferably a three-dimensional cube. More preferably, all of the two or more three-dimensional elements are three-dimensional cubes.

According to an embodiment of the present invention, the augmented reality procedure comprises that an outer appearance of the package in the displayed image or video is augmented, especially before and/or while the package is opened as part of the augmented reality procedure,
wherein preferably, augmenting the outer appearance of the package - in the displayed image or video - comprises changing or inserting:
- a color of the package in the displayed image or video, and/or
- a logo or graphic on the package in the displayed image or video, and/or
- a text on the package in the displayed image or video. Thereby, the outer appearance of the package in the displayed image or video can be changed as compared to the outer appearance of the real package. In this way, a real package that is free of printings can be augmented as part of the augmented reality procedure such that colors, logos, graphics and/or text is virtually displayed on the package. Such a virtual display of colors, logos, graphics and/or text on the package may be employed to link the outer appearance of the package to the object inside and/or to a vendor of the object without the need of printing individual boxes for different objects or vendors. Thereby, a particularly environment-friendly procedure may be achieved.

According to an embodiment of the present invention, a main menu, comprising a plurality of icons, is accessible by means of an input by the user, especially via the input means, during all steps of the method, such that - in response to said input by the user - the main menu is displayed on the display device,
wherein by selecting an icon of the plurality of icons by means of an input of the user, especially via the input means, additional information is accessible to the user and/or displayed to the user by means of the display device,
wherein the additional information comprises one or more of the following information:
- legal information related to the object,
- information on product features related to the object,
- information on sustainability related to the object,
- an animated installation instruction of the object,
- a contact information of a customer service related to the object
- an overview of sub-objects of the object in the package. An icon of the plurality of icons is selectable by means of an input of the user, especially via the input means.

According to an embodiment of the present invention, the package is a single package, especially such that the object is located inside the package without an intermediate package or package layer between the object and the package. Especially, the package is formed by means of a single box, preferably a cardboard box, wherein the object is placed in the box without an intermediate additional box around the object. Preferably, the object is shipped inside said single box without an additional box being placed around said single box. By using a single box as a package, the amount of packaging material may be significantly reduced. Additionally, by means of the present invention, the outer appearance of the single box can be augmented an individualized as part of the augmented reality procedure.

According to an embodiment of the present invention, - especially apart from the visual marker - the package is free of printed logos or colors on its outside. Thereby, no printing is required. It is advantageously conceivable that any information or graphics are added by means of the augmented realty procedure. By moving the graphics and visuals of a box to a digital format, the cost, energy consumption and material consumption related to printing can be reduced.

According to an embodiment of the present invention, the object comprised in the package is unpacked, especially during and/or after the augmented reality procedure, wherein the unpacked object is recorded by means of the detection means, wherein the unpacked object is mapped with a virtual overlay such that a visual guidance for installing the object is displayed on the display device. The visual guidance may comprise instructions and/or graphical pointers on how the object is to be used and/or installed. It is conceivable that by using the user device, the object (or product) maps itself with the virtual overlay, and the user is guided through an AR-overlay of how to install the object with visual guidance. Therein, an augmented reality procedure with object tracking may be employed.

According to an embodiment of the present invention, the augmented reality procedure is changed or personalized based on one or more of the following information:
-- personal information, identity information and/or login information related to a user of the user device and/or related to the user device,
-- a system language of the user device,
-- a position information of the user device, especially a satellite navigation position information, preferably a GPS information. Said information may, e.g., be made available to the user device via sensor means of the user device and/or via transmitting said information to the user device from an external server and/or telecommunication network. An advantageous personalization regarding the user device and/or regarding a user of the device may be achieved. Thereby, the method can be individualized, offering different experiences for different users. Moreover, it becomes possible to individualize the method such that additional information and guidance, e.g., on the installation of the product, may be provided to users that require additional assistance.

According to an embodiment of the present invention, it is particularly advantageous that the language of the text and/or information displayed as part of the augmented reality procedure and/or as part of a menu related to the augmented reality procedure, especially the main menu, and/or as part of an installation guide and/or as part of the visual guidance for installing the object is chosen in dependence of the personal information, identity information, login information, system language of the user device and/or position information. Thereby, a particularly advantageous adjustment of the AR-procedure may be achieved without having to print manuals or information in multiple languages. The content can be scaled to different countries and languages without having to change the package or physical content of the package.

According to an embodiment of the present invention, it is preferred
-- that - before recording the package with the detection means - an application program for performing the augmented reality procedure is transferred to the user device, and/or
-- that in response to detecting the visual marker on the package by means of the detection means, an application program for performing the augmented reality procedure is transferred to the user device. Preferably, the application program is a computer application that is transferred to the user device from an application distribution entity, such as an application store, especially by means of a wireless communication, preferably by means of a telecommunication network. Preferably, the application program is installed on the user device. It is conceivable that the application program comprises the functionality employed in the steps of a method according to an embodiment of the present invention.

According to an embodiment of the present invention, it is possible that some or all visuals of the augmented realty procedure are rendered and/or generated by means of a telecommunication network and/or transmitted via a telecommunication network to the user device. For instance, it is possible to integrate a rendering of virtual content via a telecommunication network, e.g., a 5G network. It is conceivable to visualize and/or to interact with high-polygon content via local processing power (of the user device) or via cloud processing power, especially of a cloud related to the telecommunication network.

Furthermore, the present invention relates to a user device for augmented reality-assisted handling of a package, comprising at least one object, wherein the user device comprises detection means and wherein the user device comprises a display device or is in communication with a display device,
wherein the package comprises a visual marker, wherein the visual marker is related to the object,
wherein the user device is configured such that:
-- by means of the detection means of the user device the visual marker of the package is detected, wherein an image or video of the package is displayed on the display device,
-- in response to detecting the visual marker, an augmented reality procedure is carried out, wherein the augmented reality procedure at least comprises that - in the displayed image or video, displayed by means of the display device, - the package is opened and/or an image of the object is displayed.

Furthermore, the present invention relates to a system for augmented reality-assisted handling of a package, comprising at least one object, by means of a user device, wherein the system comprises the user device, wherein the user device comprises detection means and wherein the user device comprises a display device or is in communication with a display device,
wherein the package comprises a visual marker, wherein the visual marker is related to the object,
wherein the system is configured such that:
-- by means of the detection means of the user device the visual marker of the package is detected, wherein an image or video of the package is displayed on the display device,
-- in response to detecting the visual marker, an augmented reality procedure is carried out, wherein the augmented reality procedure at least comprises that - in the displayed image or video, displayed by means of the display device, - the package is opened and/or an image of the object is displayed.

It is conceivable that the user device and/or the system comprise computer means for carrying out a method according to an embodiment of the present invention.

Additionally, the present invention relates to a program comprising a computer readable program code, which, when executed on a computer, especially on a user device according to an embodiment of the present invention or on a system according to an embodiment of the present invention, causes the computer, especially the user device or the system, to perform a method according to an embodiment of the present invention.

Still additionally, the present invention relates to a computer-readable medium comprising instructions which when executed on a computer, especially on a user device according to an embodiment of the present invention or on a system according to an embodiment of the present invention, causes the computer, especially the user device or the system, to perform a method according to an embodiment of the present invention.

For the inventive user device, the inventive system, the inventive program and the inventive computer-readable medium the same embodiments, advantages and effects may be achieved that have been described with respect to the inventive method or with respect to embodiments of the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a user device and a package according to an embodiment of the present invention.
Figure 2 schematically illustrates a method according to an embodiment of the present invention.
Figure 3 schematically illustrates a method according to an embodiment of the present invention.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

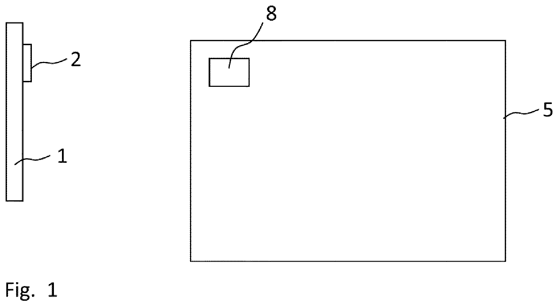

In Figure 1, a mobile user device 1, e.g., a smartphone or tablet, according to an embodiment of the present invention is shown. The user device 1 comprises detection means 2, in particular a camera, and a display device 3 (not shown in Fig. 1). The detection means 2 are configured for image and/or video recording. By means of the detection means 2, a visual marker 8, which is positioned on the outside of a package 5, can be detected. The package 5 contains at least one object. The object is protected by the package 5, e.g., when the object is shipped.

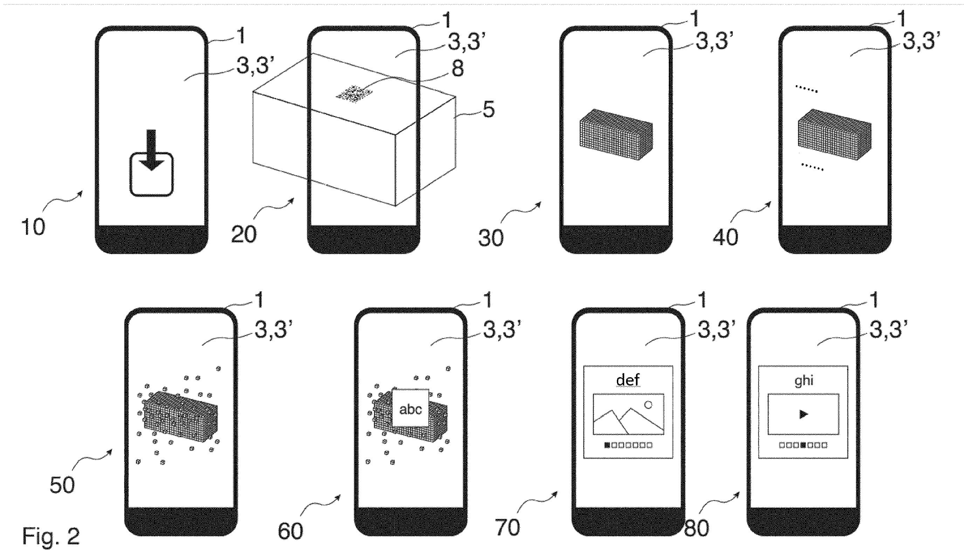

In Figure 2, a method according to an embodiment of the present invention is shown. In a first method step 10, a user is prompted to download an application program and optionally to create an account if the user does not already have an account. In the first method step 10, the application program for performing an augmented reality procedure according to an embodiment of the present invention is downloaded to a user device 1. For instance, it is possible that the application program is downloaded to the user device 1 in response to a user of the user device purchasing an object. The user device comprises detection means 2 and a display device 3. Furthermore, the user device 1 comprises input means 3', especially a touch pad related to the display device 3. In the second method step 20, by means of the detection means 2 of the user device 1 an image or video of the package 5 that contains the object is recorded such that a visual marker 8, e.g., a Quick Response code (QR code), on the outside of the package 5 is scanned. In a third method step 30, the augmented reality procedure is started and an image or video of the package is displayed on the display device 3 of the user device 1. For instance, the color of the package in the displayed image or video is changed as compared to the color of the real package 5. Additionally or alternatively, a logo or graphic is inserted on the outside of the package in the displayed image or video. In a fourth method step 40, in the displayed image or video and as part of the augmented reality procedure, the object is revealed together with highlighted information. Thereby, a virtual unboxing is implemented. In a fifth method step 50, in the displayed image or video and as part of the augmented reality procedure, the package transforms into interaction elements, for instance, three-dimensional cubes. In a sixth method step 60, in the displayed image or video and as part of the augmented reality procedure, one of the interaction elements "abc" hovers closer to the user and prompts the user to click said interaction element by pulsing. Clicking on said interaction element "abc" will bring the user to the next step, which contains displaying product introduction related to the object. For instance, in a seventh method step 70 and eighth method step 80, embedded video explanations or other content related to the object is shown on the display device 3. For instance, it is conceivable that the user can swipe through the video explanations or the other content. The content may, e.g., contain video calling "def" or video messaging "ghi", indicated by labels "def" and "ghi" in Fig. 2.

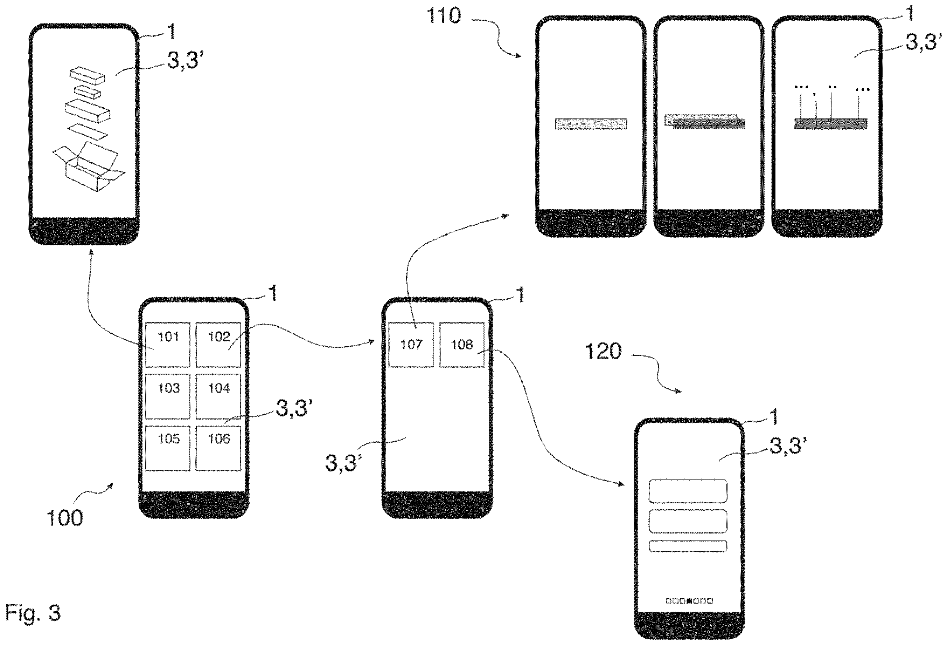

Furthermore, the application program comprises a main menu 100 that can be entered from anywhere in the application program, for instance from the augmented reality procedure. An embodiment thereof is shown in Fig. 3. In the shown embodiment, the main menu comprises six icons 101, 102, 103, 104, 105, 106. By means of the icons 101, 102, 103, 104, 105, 106, the user can view additional information, e.g., legal information, product features or sustainability information.

For instance, by selecting a first icon 101, the user can view the product features of the at least one object in the package and/or view all items or sub-objects that are contained in the package. By selecting a third icon 103, the user can return to the augmented realty procedure. By selecting a fourth icon 104, the user can view sustainability information. By selecting a fifth icon 105, the user can view legal information related to the at least one object. By selecting a sixth icon 106, the user can contact a customer service or view contact details of a customer service. By selecting a second icon 102, the user can go to an installation menu. In the installation menu, the user can, e.g., choose to view an animated installation instruction.

For instance, in the installation menu and by means of selecting a seventh icon 107, the user can enter an augmented reality-based installation instruction 110. The augmented reality-based installation instruction preferably comprises an object tracking functionality that is incorporated into the application program. Therein, real objects are blended with augmented objects, animations, overlays or pinned digital information. The augmented reality-based installation instruction preferably comprises mapping the object and the augmented reality instructions on the screen of the display device 3. The object is recognized by means of the detection means of the user device 1 and by hovering the user device 1 over the unpacked real object. Therein, price tracking of the real object may be implemented. The correct position of a trackable object is indicated by colored outlines on the screen of the display device 3. As soon as the object is detected, a three-dimensional model is overlayed and animations can be played.

By means of selecting an eighth icon 108 in the installation menu, the user can view a digital installation guide 120, wherein the user may, e.g., navigate through the pages of the guide by means of swiping.

## Claims

1. Method for augmented reality-assisted handling of a package (5), comprising at least one object, by means of a user device (1), wherein the user device (1) comprises detection means (2) and wherein the user device (1) comprises a display device (3) or is in communication with a display device (3),
wherein the package (5) comprises a visual marker (8), wherein the visual marker (8) is related to the object,
wherein for the for the augmented reality-assisted handling of the package the method comprises at least the following steps:
-- by means of the detection means (2) of the user device (1) the visual marker (8) of the package (5) is detected, wherein an image or video of the package (5) is displayed on the display device (3),
-- in response to detecting the visual marker (8), an augmented reality procedure is carried out, wherein the augmented reality procedure at least comprises that - in the displayed image or video, displayed by means of the display device (3), - the package is opened and/or an image of the object is displayed.

2. Method according to claim 1,
-- wherein the displayed image or video of the package, which is displayed by means of the display device, is a recorded image or video of the package, which is recorded by means of the detection means (2), or
-- wherein the displayed image or video of the package, which is displayed by means of display device, is a virtual image or video of the package, which is displayed in dependence of the detected visual marker (8) and/or in response to detecting the visual marker (8).

3. Method according to one of the preceding claims, wherein the augmented reality procedure additionally comprises that information related to the object, especially information on technical features of the object, is displayed.

4. Method according to one of the preceding claims, wherein the augmented reality procedure comprises, especially after and/or while the package is opened as part of the augmented reality procedure, that - in the displayed image or video - the package transforms into two or more three-dimensional elements, wherein preferably a first element of said two or more three-dimensional elements is optically highlighted and/or positioned closer to a user than the other element or elements of said two or more three-dimensional elements,
wherein by means of an input of the user, especially using input means (3') of the user device (1) or connected to the user device (1), the first element is selectable by the user.

5. Method according to one of the preceding claims, wherein the augmented reality procedure comprises that an outer appearance of the package in the displayed image or video is augmented, especially before and/or while the package is opened as part of the augmented reality procedure,
wherein preferably, augmenting the outer appearance of the package - in the displayed image or video - comprises changing or inserting:
- a color of the package in the displayed image or video, and/or
- a logo or graphic on the package in the displayed image or video, and/or
- a text on the package in the displayed image or video.

6. Method according to one of the preceding claims, wherein a main menu (100), comprising a plurality of icons (101, 102, 103, 104, 105, 106), is accessible by means of an input by the user, especially via the input means (3'), during all steps of the method, such that - in response to said input by the user - the main menu (100) is displayed on the display device (3),
wherein by selecting an icon of the plurality of icons (101, 102, 103, 104, 105, 106) by means of an input of the user, especially via the input means (3'), additional information is accessible to the user and/or displayed to the user by means of the display device (3),
wherein the additional information comprises one or more of the following information:
- legal information related to the object,
- information on product features related to the object,
- information on sustainability related to the object,
- an animated installation instruction of the object,
- a contact information of a customer service related to the object
- an overview of sub-objects of the object in the package

7. Method according to one of the preceding claims, wherein the package (5) is a single package, especially such that the object is located inside the package (5) without an intermediate package or package layer between the object and the package (5).

8. Method according to one of the preceding claims, wherein - especially apart from the visual marker (8) - the package (5) is free of printed logos or colors on its outside.

9. Method according to one of the preceding claims, wherein the object comprised in the package (5) is unpacked, especially during and/or after the augmented reality procedure, wherein the unpacked object is recorded by means of the detection means (2), wherein the unpacked object is mapped with a virtual overlay such that a visual guidance for installing the object is displayed on the display device (3).

10. Method according to one of the preceding claims, wherein the augmented reality procedure is changed or personalized based on one or more of the following information:
-- personal information, identity information and/or login information related to a user of the user device (1) and/or related to the user device (1),
-- a system language of the user device (1),
-- a position information of the user device (1), especially a satellite navigation position information, preferably a GPS information.

11. Method according to one of the preceding claims,
-- wherein - before recording the package (5) with the detection means (2) - an application program for performing the augmented reality procedure is transferred to the user device (1),
and/or
-- wherein in response to detecting the visual marker (8) on the package (5) by means of the detection means (2), an application program for performing the augmented reality procedure is transferred to the user device (1).

12. User device (1) for augmented reality-assisted handling of a package (5), comprising at least one object, wherein the user device (1) comprises detection means (2) and wherein the user device (1) comprises a display device (3) or is in communication with a display device (3),
wherein the package (5) comprises a visual marker (8), wherein the visual marker (8) is related to the object,
wherein the user device (1) is configured such that:
-- by means of the detection means (2) of the user device (1) the visual marker (8) of the package (5) is detected, wherein an image or video of the package is displayed on the display device (3),
-- in response to detecting the visual marker (8), an augmented reality procedure is carried out, wherein the augmented reality procedure at least comprises that - in the displayed image or video, displayed by means of the display device (3), - the package is opened and/or an image of the object is displayed.

13. System for augmented reality-assisted handling of a package (5), comprising at least one object, by means of a user device (1), wherein the system comprises the user device (1), wherein the user device (1) comprises detection means (2) and wherein the user device (1) comprises a display device (3) or is in communication with a display device (3),
wherein the package (5) comprises a visual marker (8), wherein the visual marker (8) is related to the object,
wherein the system is configured such that:
-- by means of the detection means (2) of the user device (1) the visual marker (8) of the package (5) is detected, wherein an image or video of the package is displayed on the display device (3),
-- in response to detecting the visual marker (8), an augmented reality procedure is carried out, wherein the augmented reality procedure at least comprises that - in the displayed image or video, displayed by means of the display device (3), - the package is opened and/or an image of the object is displayed.

14. Program comprising a computer readable program code, which, when executed on a computer, especially on a user device (1) according to claim 12 or on a system according to claim 13, causes the computer, especially the user device (1) or the system, to perform a method according one of claims 1 to 11.

15. Computer-readable medium comprising instructions which when executed on a computer, especially on a user device (1) according to claim 12 or on a system according to claim 13, causes the computer, especially the user device (1) or the system, to perform a method according one of claims 1 to 11.
